# EUROPÄISCHE PATENTSCHRIFT

(11) **EP 1 577 653 B1**
(45) Veröffentlichungstag und Bekanntmachung des Hinweises auf die Patenterteilung: **03.01.2007**
(21) Anmeldenummer: 05102157.4
(22) Anmeldetag: 18.03.2005
(51) Int. Cl.: G01K 1/02, H05B 1/02

(54) **Fernüberwachungssystem für Dampfgarer und Teile davon**
Remote supervision system for steam cooker and parts thereof
Système de surveillance à distance pour cuiseur à vapeur et des parties de cela

(30) Priorität: 19.03.2004 DE 102004013621
(43) Veröffentlichungstag der Anmeldung: 21.09.2005
(73) Patentinhaber: BSH Bosch und Siemens Hausgeräte GmbH, 81739 München (DE)
(72) Erfinder: Götz, Bernhard, 75059 Zaisenhausen (DE); Herbolsheimer, Jochen, 83308 Trostberg (DE); Hintermayer, Manfred, 76185 Karlsruhe (DE)

(56) Entgegenhaltungen:
- EP-A- 0 687 866
- US-A- 4 088 863
- US-A- 4 297 557
- US-A- 4 340 796
- US-A- 4 381 439

## Beschreibung

Die Erfindung betrifft ein Überwachungssystem für Dampfgarer und hiervon ein Messgerät und ein Überwachungsgerät.

Aus der DE 102 06 690 A1 ist ein Dampfgarer bekannt, welcher keine eigene Heizquelle hat, sondern im Backraum eines Backofens von einer Backraum-Bodenheizung erwärmbar ist. Der Dampfgarer enthält eine wärmeleitende Wanne zur Aufnahme eines Flüssigkeitsvorrates, einen auf der Wanne angeordneten Gargutträger zur Aufnahme von Gargut. Durch die Bodenheizung des Backraumes wird in der Wanne Dampf erzeugt, der das Gargut auf dem Gargutträger umströmt, um das Gargut dampfzugaren. Der Benutzer steuert den gesamten Garprozess. Der Benutzer bringt das Gargut in den Gargutträger, schaltet die Bodenheizung des Backofens ein, wartet die von ihm selbst bestimmte Garzeitdauer ab, bis das Gargut verzehrfertig ist, und nimmt danach das Gargut wieder aus dem Gargutträger. Der Benutzer erhält keine Informationen über den während des Garprozesses jeweils vorhanden Zustand im Dampfgarer und über den jeweiligen Zustand des Gargutes, was beides zusammen hiermit als Betriebszustand bezeichnet wird.

Den Erfindern ist auch ein Dampfgarkochtopf bekannt, welcher auf einer Herdplatte eines Herdes erhitzbar ist. In dem Dampfgarkochtopf sind ein Temperatursensor und ein Funksender integriert, dessen Sendeleistung auf die kurze Distanz zu einem Funkempfänger im Herd begrenzt ist, auf dessen Kochplatte der Dampfgarer steht. Eine elektronische Steuerung des Herdes regelt die Herdplattentemperatur in Abhängigkeit von der jeweiligen Temperatur, die von dem Sensor im Dampfgarkochtopf gemessen wird.

Ferner zeigt die DE 198 02 558 A1 ein drahtloses Fernbedienungssystem für Elektrowärmegeräte, insbesondere Elektroherde, deren Fernbedienungsgerät sowohl einen Sender als auch einen Empfänger enthält. Der Sender des Elektrowärmegerätes erhält seine elektrische Energie von dem Elektrowärmegerät.

Durch die Erfindung soll die Aufgabe gelöst werden, eine vorteilhafte Möglichkeit zu schaffen, durch welche eine Person im gesamten Hausbereich und vorzugsweise auch im Garten eines Hauses, in welchem sich ein Dampfgarer befindet, den jeweiligen Betriebszustand von Dampfgarprozessen überwachen kann, auch wenn der Dampfgarer keine eigene Energiequelle hat.

Diese Aufgabe wird gemäß der Erfindung durch die Merkmale der unabhängigen Patentansprüche gelöst.

Dem gemäss betrifft die Erfindung ein autarkes Messgerät für Dampfgarer, dadurch gekennzeichnet, dass es eine manuell tragbare, in einen Dampfgarer einlegbare mobile Einheit ist, die eine Sensorschaltung zur Erzeugung von Messsignalen in Abhängigkeit von mindestens einem Sensor zum Detektieren von Betriebszuständen in einem Dampfgarer enthält, einen Funksender zum leitungslosen Senden von elektromagnetischen Funksignalen in Abhängigkeit von den Messsignalen der Sensorschaltung zu einem außerhalb des Dampfgarers angeordneten Funkempfänger enthält, wobei der Funksender eine Sendereichweite von vorzugsweise mindestens 10 m im abschirmfreien Luftraum hat, und zur autarken Stromversorgung eine Stromquelle vorzugsweise in Form eines wiederaufladbaren Akkumulators oder einer Batterie oder mindestens eine Aufnahmekammer dafür enthält.

Dies hat den Vorteil, dass der Garprozess von Dampfgarern fernüberwacht werden kann, unabhängig davon, ob der betreffende Dampfgarer einen elektrischen Stromanschluss hat oder nicht.

Es kann an jeder beliebigen Stelle in einem Haus oder in dessen Nähe ein ortsfest installiertes oder vorzugsweise ein mobiles Überwachungsgerät mit einem Funkempfänger verwendet werden, um den jeweiligen Betriebszustand des Dampfgarers zu überwachen. Die betreffende Person braucht nicht mehr am Ort des Dampfgarers dessen Betrieb zu überwachen. Die Person braucht den Dampfgarer und dessen Inhalt nicht mehr visuell zu besichtigen, z. B. eine Backofentür oder einen Dampfgarer zu öffnen, um den Betriebszustand zu erkennen.

Die Messgeräte-Einheit und der Sensor sind vorzugsweise beide wasserdicht bis mindestens 1 (ein) bar Wasserdruck. Ferner sind sie vorzugsweise temperaturbeständig bis mindestens 120 °C oder vorzugsweise bis mindestes 150 °C oder bis 200 °C oder mehr, damit sie in der Dampfatmosphäre eines Dampfgarers angeordnet werden können und eine lange Lebensdauer haben.

Das Meßgerät kann einen oder mehrere Sensoren haben, beispielsweise einen Sensor für die Umgebungstemperatur des Sensor und/oder einen anderen Sensor zum Detektieren der Temperatur des Gargutes. Der Sensor für die Umgebungstemperatur ist vorzugsweise in die Messgeräte-Einheit integriert, damit sie handlicher und unempfindlicher gegen Beschädigungen sind. Der Sensor für die Garguttemperatur kann aus der Messgeräte-Einheit herausragen oder mit dieser vorzugsweise über eine flexible Leitung verbunden sein, so dass er die Oberlfäche des Gargutes kontaktieren kann oder in das Gargut eingesteckt werden kann, um die Temperatur an der Oberfläche oder im Inneren des Gargutes zu messen. Ein Sensor kann zur Feuchtigkeits- oder Dampfgehaltsmessung ausgebildet sein, zusätzlich oder anstatt zur Temperaturmessung.

Gemäß einer bevorzugten Ausführungsform der Erfindung ist die Messgeräte-Einheit zur kontaktlosen Wiederaufladung ihres Akkumulators durch ein kontaktloses Aufladegerät ausgebildet. Dies hat den Vorteil, dass es keine Kontakte gibt, die korrodieren können, beispielsweise durch die fetthaltigen Dämpfe (Wrasen) im Dampfgarer. Dadurch kann der wiederaufladbare Akkumulator auf einfache Weise in der Messgeräte-Einheit wasser- und dampfdicht untergebracht werden, z. B. in einem verschraubten oder vorzugsweise verschweißten Gehäuse oder Gussmaterialblock, welches bzw. welcher auch den Funksender enthält.

Derartige kontaktlose Wiederaufladungssysteme sind beispielsweise bei elektrischen Zahnbürsten bekannt. Die von elektrischen Zahnbürsten her bekannte Technik besteht in der Anwendung des Transformatorprinzips. Der wiederaufladbare Akkumulator enthält den eigentlichen Akkumulator und über eine Gleichrichterschaltung daran angeschlossen eine Transformator-Sekundärspule. Das zugehörige Aufladegerät enthält eine Transformator-Primärspule und ist an das elektrische Stromnetz anschließbar.

Das Überwachungsgerät kann ein ortsfest installiertes, autarkes oder mit externem Strom versorgtes Gerät sein. Vorzugsweise ist ein autarkes Überwachungsgerät vorgesehen, welches eine manuell tragbare, mobile Einheit ist, welche einen Funkempfänger zum Empfang der elektromagnetischen Signale des Funksenders des Messgerätes, und optische und/oder akustische Anzeigemittel zum Anzeigen von Informationen entsprechend den empfangenen Funksignalen enthält. Ferner enthält das autarke Überwachungsgerät eine Batterie oder vorzugsweise einen wiederaufladbaren Akkumulator oder eine Batterieaufnahmekammer oder eine Akkumulator-Aufnahmekammer zur autarken Stromversorgung.

Eine solche mobile Überwachungsgeräte-Einheit, welche klein und leicht ist wie ein mobiles Telefon (mobile phone, Handy), ermöglicht es einer Person, an jedem beliebigen Ort innerhalb des Hauses oder benachbart dazu in einem Garten, einen Dampfgarprozess zu überwachen, ohne dass sie an den Ort des Dampfgarers oder an einen anderen Ort gebunden ist. Vielmehr kann sie die mobile Einheit mit sich tragen, z. B. in einer Jackentasche oder Hosentasche, und ist dadurch jederzeit ortsunabhängig.

Gemäß einer bevorzugten Ausführungsform enthält die mobile Einheit, welche das autarke Überwachungsgerät bildet, auch eine Alarmuhr, an welcher verschiedene Zeitdauern einstellbar sind, und welche beim Zeitablauf ein Alarmsignal erzeugt. Das Alarmsignal kann ein optisches oder akustisches Signal oder ein Vibrationssignal sein, durch welch letzteres die mobile Einheit oder ein Teil von ihr im Alarmfalle vibriert. Dadurch wird eine Person an den Garproszess automatisch erinnert, ohne dass sie ständig daran zu denken braucht.

Gemäß einer bevorzugten Ausführungsform eines Fernüberwachungssystems für Dampfgarer enthalten sowohl das Messgerät als auch das Überwachungsgerät eine Stromquelle in Form eines wiederaufladbaren Akkumulators, wobei beide Systeme an eine elektrische Ladestation adaptiert sind, so dass beide von der gleichen Ladestation elektrisch aufladbar sind, entweder über elektrische Kontakte oder vorzugsweise in der genannten Weise kontaktfrei.

Die Erfindung wird im Folgenden mit Bezug auf die Zeichnungen anhand einer bevorzugten Ausführungsform als Beispiel beschrieben, ohne darauf beschränkt zu sein. In den Zeichnungen zeigen:
- Fig. 1: schematisch ein, bezüglich der elektrischen Energieversorgung autarkes, Fernüberwachungssystem gemäß der Erfindung für Dampfgarer,

- Fig. 2: schematisch ein autarkes Messgerät nach der Erfindung,
- Fig. 3.: schematisch ein autarkes Überwachungsgerät nach der Erfindung,
- Fig. 4: schematisch und abgebrochen das Messgerät nach der Erfindung und ein elektrisches Ladegerät zum kontaktlosen Laden eines wiederaufladbaren Akkumulators des Messgerätes und des Überwachungsgerätes.

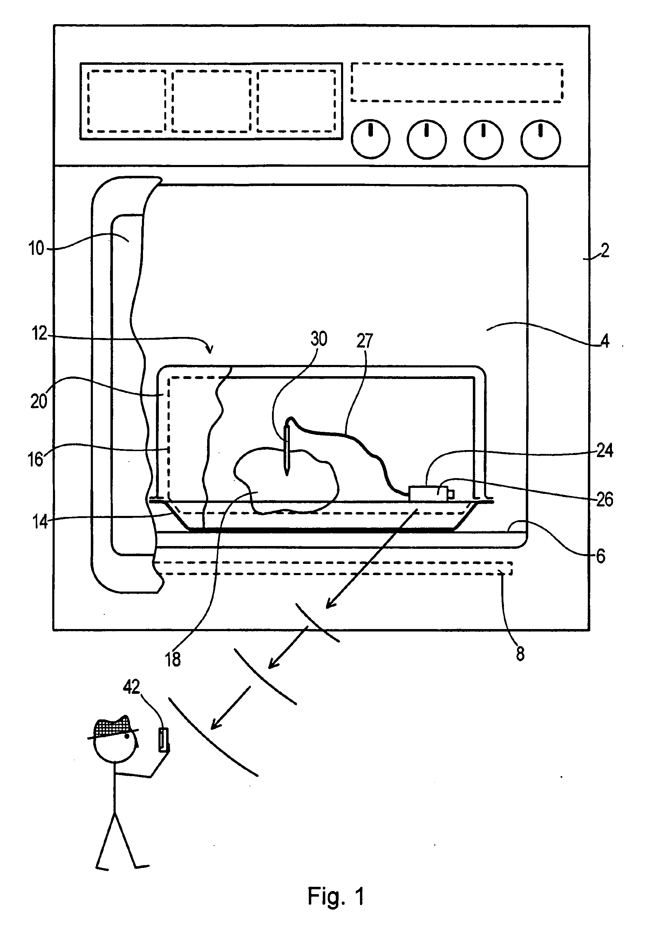

Fig. 1 zeigt einen Backofen 2 mit einem Backraum 4, unter dessen Backraumboden 6 eine Bodenheizung 8 angeordnet ist. Die Bodenheizung 8 kann elektrisch oder eine Gasheizung sein. Der Backraum 4 ist durch eine Tür 10 verschließbar, welche vorzugsweise aus Glas besteht, so dass auch bei geschlossener Tür der Backraum 4 beobachtet werden kann und die Backraumtür keine Abschirmung für elektromagnetische Wellen eines nachfolgend beschriebenen Funksenders bildet.

Auf dem Backraumboden 6 steht ein Dampfgarer 12, welcher eine Wanne 14 zur Aufnahme 14 eines Flüssigkeitsvorrates (z. B. Wasser) und einen darauf angeordneten gitterförmigen Gargutträger 16 zur Aufnahme von Gargut 18 und einen Deckel 20 aufweist. Der Deckel 20 besteht vorzugsweise aus durchsichtigem, hitzebeständigem Glas. Mithilfe der Bodenheizung 8 des Backofens 2 wird die Flüssigkeit in der Wanne 14 erhitzt und dadurch Dampf erzeugt, welcher das Gargut 18 umströmt, um es zu garen.

Ein autarkes Messgerät 24 ist eine manuell tragbare mobile Einheit, beispielsweise in Größe und Gewicht eines mobilen Telefons (mobile phone, Handy) oder kleiner und leichter, so dass es bei Bedarf in den Dampfgarer 10 gelegt werden kann, um darin Betriebsdaten zu erfassen.

Die Messgeräte-Einheit 24 von Fig. 1 hat ein geschlossenes Gehäuse 26 und einen (oder mehrere) in das Gehäuse 26 integrierten Sensor 28 und/oder einen (oder mehrere) über eine flexible Leitung 27 mit dem Gehäuse 26 verbundenen Sensor 30, der z. B. in das Gargut einsteckbar ist, um in dem Gargutinneren die Temperatur zu messen. Der (oder die) Sensor(en) 28 bzw. 30 ist in dem Gehäuse 26 mit einer darin untergebrachten Sensorschaltung 34 elektrische leitend verbunden.

Der Sensor 28 und/oder der Sensor 30 kann ein Temperatursensor sein zur Messung seiner Umgebungstemperatur oder ein Feuchte-Sensor sein zum Messen des Feuchtigkeitsgehaltes oder Dampfgehaltes im Dampfgarer oder im Gargut.

Das Gehäuse 26 enthält ferner einen wiederaufladbaren Akkumulator 36 und einen Funksender 38 zum leitungslosen Senden von elektromagnetischen Funksignalen in Abhängigkeit von den Messsignalen des mindestens einen Sensors 28 und/oder 30 zu einem Funkemfänger 40 eines Überwachungsgerätes 42, welches außerhalb des Dampfgarers 12 und auch außerhalb des Backofens 2 entfernt von diesen angeordnet ist.

Der Funksender 38 hat eine Sendereichweite von mindestens 10 m, vorzugsweise mindestens 20 m, vorzugsweise zwischen 20 m und 100 m, im abschirmfreien Luftraum. Die Leistung des Funksenders 38 liegt vorzugsweise unter 1,0 W, und noch bevorzugter unter 0,25 W.

Eine Sendeantenne 44 des Funksenders 38 kann aus dem Gehäuse 26 herausragen oder vorzugsweise in diesem untergebracht oder integriert sein. Die Funkantenne 44 ist vorzugsweise eine geradlinige elektrische Leitung. Geradlinige Antennen ermöglichen die Übertragung von größeren Sendeleistungen als Antennenwicklungen oder Antennenspiralen.

Das Messgerät 24 mit den Sensoren 28 und 30 ist wasserdicht bis mindestens 1 bar Wasserdruck und temperaturbeständig bis mindestens 120 °C, vorzugsweise bis mindestens 150 °C oder 200 °C ausgebildet.

Der Funksender 38 des Messgerätes 24 ist vorzugsweise zum getakteten Senden der Messsignale ausgebildet. Dadurch wird elektrische Energie gespart und es wird die Benutzungsdauer verlängert, bis der Akkumulator 36 wieder elektrisch aufgeladen werden muss. Diese Vorteile sind umso größer, je länger die Sendepausen zwischen den Sendezeiten sind. Beispielsweise wird taktweise nach je 2 Sekunden bis 60 Sekunden ein Messsignalpaket während einer Dauer von 0,5 Sekunden bis 3 Sekunden übertragen.

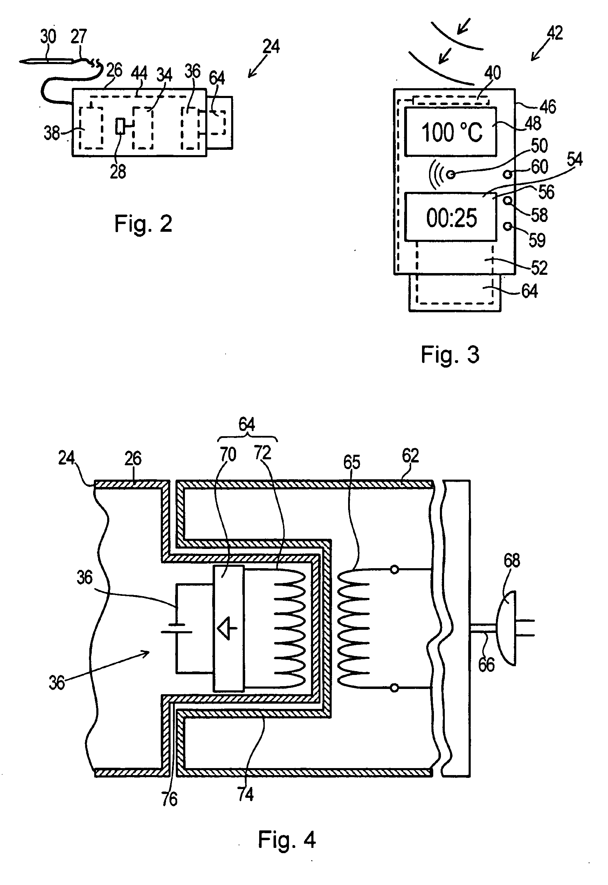

Das autarke Überwachungsgerät 42 ist eine manuell tragbare, mobile Einheit, vorzugsweise ein Taschengerät, welches ähnlich wie ein Mobiltelefon (mobile phone, Handy) handlich, klein und leicht ist. Ein solches ist in den Fig. 1 und 3 schematisch dargestellt.

Der Funkempfänger 40 des Überwachungsgerätes 42 ist zum Empfang der elektromagnetischen Funksignale vom Funksender 38 des Messgerätes 24 auf dessen Sendefrequenz abgestimmt. Das Überwachungsgerät 42 hat ein Gehäuse 46, in welchem der Funkempfänger 40 untergebracht ist und welches ein Display 48 zur Anzeige des Messergebnisses von dem Sensor 28 bzw. 30 aufweist. Die gemessene Temperatur ist als Beispiel mit 100 °C in Fig. 3 angegeben. Ferner kann ein akustischer Signalgeber 50 im Gehäuse 46 vorgesehen sein zur akustischen Anzeige von Warnsignalen entsprechend den empfangenen Funksignalen.

Ferner enthält das Überwachungsgerät 42 in seinem Gehäuse 46 eine Batterie oder vorzugsweise einen wiederaufladbaren Akkumulator 52 für die autarke Stromversorgung des Überwachungsgerätes.

Ferner enthält das autarke Überwachungsgerät 42 vorzugsweise eine Alarmuhr 54, an welcher verschiedene Zeitdauern einstellbar sind, deren Restlaufzeit jeweils in einem Zeitdisplay 56 anzeigbar ist. Als Beispiel ist eine Restlaufzeit von 25 Sekunden in Fig. 3 angegeben. Wenn das Zeitdisplay 56 keine Restlaufzeit mehr anzeigt, stellt dies ein Warnsignal für eine Person dar. Als Warnsignal kann zusätzlich oder statt dessen auch ein akustisches Warnsignal erzeugt werden, beispielsweise von dem Signalgeber 50, oder ein Vibrations-Signal, indem das Überwachungsgerät 42 einen Vibrator enthält, welcher bei Zeitablauf das Überwachungsgerät vibrieren lässt.

Das autarke Überwachungsgerät 42 hat vorzugsweise ein manuelles Bedienelement 58 zum Einstellen der Alarmuhr 54, ein manuelles Bedienelement 59 zum Rückstellen der eingestellten Zeitdauer auf Null, und ein manuelles Bedienelement 60 zum Abschalten des akustischen Alarmes des akustischen Signalgebers 50.

Das Messgerät 24 und vorzugsweise auch das Überwachungsgerät 42 enthalten vorzugsweise in ihrem Gehäuse 26 bzw. 46 je eine Wiederaufladeschaltung 64 zum elektrischen Aufladen ihres wiederaufladbaren Akkumulators 36 bzw. 52 von einem Ladegerät 62 ohne die Verbindung von elektrischen Kontakten und ohne Herausnehmen des Akkumulators aus dem Gehäuse. Ein mögliches Prinzip ist in Fig. 4 schematisch dargestellt, welches abgebrochen ein Ladegerät 62 und ein abgebrochenes Ende des Messgerätes 24 zeigt. Das Wiederaufladesystem beruht auf dem Transformatorprinzip. Das Ladegerät 62 enthält eine Transformator-Primärwicklung 65, welche über ein Kabel 66 mit einem Stecker 68 an eine Steckdose anschließbar ist, welche eine ortsübliche Netzspannung hat.

Die Wiederaufladeschaltung 64 enthält eine Gleichrichterschaltung 70 zwischen dem wiederaufladbaren Akkumulator 36 des Messgerätes 24 (bzw. dem wiederaufladbaren Akkumulator 52 des Überwachungsgerätes 42) und einer Transformator-Sekundärwicklung 72, welche von der Primärwicklung 65 des Ladegerätes 62 elektromagnetisch erregt wird, wenn das Messgerät 24 (bzw. das Überwachungsgerät 46) an das Ladegerät 62 angenähert wird. Vorzugsweise hat ein Gerät eine Aufnahme-Steckfassung 74 und das andere Gerät einen Steck-Sockel 76, welche ineinander passen und eine korrekte Position der Primärwicklung 65 zur Sekundärwicklung 72 definieren.

Der Akkumulator 36 versorgt im Messgerät 24 den Funksender 38 und die elektrische Sensorschaltung 34 mit elektrischer Energie. In ähnlicher Weise versorgt der Akkumulator 52 des Überwachungsgerätes 42 den Funkempfänger 40, das Messsignal-Display 48, den Signalgeber 50 und die elektrische Alarmuhr 54 mit elektrischer Energie.

Vorzugsweise sind das Messgerät 24 und das Überwachungsgerät 46 in gleicher Weise zum Wiederaufladen durch das Ladegerät 62 ausgebildet, so dass beide alternativ von dem gleichen Ladegerät 62 elektrisch aufgeladen werden können.

## Patentansprüche

1. Autarkes Messgerät (24) für Dampfgarer, **dadurch gekennzeichnet, dass** es eine tragbare, in einen Dampfgarer legbare Einheit ist, die eine Sensorschaltung (34) zur Erzeugung von Messsignalen in Abhängigkeit von mindestens einem Sensor (28,30) zum Detektieren von Betriebszuständen in dem Dampfgarer enthält, einen Funksender (38) zum leitungslosen Senden von Funksignalen in Abhängigkeit von den Messsignalen der Sensorschaltung (34) zu einem außerhalb des Dampfgarers angeordneten Funkempfänger enthält, und dass der Funksender eine Sendereichweite von mehr als 5 m, insbesondere mindestens 10 m im abschirmfreien Luftraum hat, und eine autarke Stromversorgung enthält.

2. Autarkes Messgerät nach Anspruch 1, **dadurch gekennzeichnet, dass** die Stromversorgung eine Stromquelle in Form eines wiederaufladbaren Akkumulators (36) oder einer Batterie oder mindestens eine Aufnahmekammer dafür enthält.

3. Autarkes Messgerät nach Anspruch 1 oder 2, **dadurch gekennzeichnet, dass** der Sensor (30) extern von der Einheit angeordnet und mit ihr verbunden ist.

4. Autarkes Messgerät nach Anspruch 1 oder 2, **dadurch gekennzeichnet, dass** der Sensor (28) in die Einheit integriert ist.

5. Autarkes Messgerät nach einem der vorhergehenden Ansprüche, **dadurch gekennzeichnet, dass** die Stromquelle ein wiederaufladbarer Akkumulator (36) ist und die Einheit keine freiliegenden elektrischen Kontakte aufweist, sondern zur kontaktlosen Wiederaufladung des Akkumulators (36) durch ein kontaktloses Aufladegerät (62) ausgebildet ist.

6. Autarkes Messgerät nach einem der vorhergehenden Ansprüche, **dadurch gekennzeichnet, dass** der mindestens eine Sensor (28,30) zum Messen von mindestens einem der folgenden Betriebszustände in einem Dampfgarer ausgebildet ist: Sensor-Umgebungstemperatur in dem Dampfgarer, Garguttemperatur, Feuchtigkeitsgehalt oder Dampfgehalt.

7. Autarkes Messgerät nach einem der vorhergehenden Ansprüche, **dadurch gekennzeichnet, dass** der Funksender (38) zum getakteten Senden der Funksignale ausgebildet ist.

8. Überwachungsgerät, **dadurch gekennzeichnet, dass** es eine tragbare, mobile Einheit ist, welche einen Funkempfänger (40) zum Empfang von elektromagnetischen Funksignalen des Funksenders (38) des autarken Messgerätes nach einem der vorhergehenden Ansprüche enthält, dass die mobile Einheit optische Anzeigemittel (48) und/oder einen akustischen Signalgeber (50) zur Anzeige von Informationen und/oder von hinweisenden Signalen entsprechend den empfangenen Funksignalen enthält, und dass die mobile Einheit eine Stromquelle vorzugsweise in Form einer Batterie oder eines wiederaufladbaren Akkumulator (52) zur autarken Stromversorgung oder eine Aufnahmekammer dafür aufweist.

9. Überwachungsgerät nach Anspruch 8, **dadurch gekennzeichnet, dass** es eine Uhr (54) enthält, an welcher verschiedene Zeitdauern einstellbar sind, und welche ein Display (56) aufweist, welches die jeweilige Restzeitdauer anzeigt.

10. Überwachungsgerät nach Anspruch 8 oder 9, **dadurch gekennzeichnet, dass** die Stromquelle ein wiederaufladbarer Akkumulator (52) ist und die Einheit keine freiliegenden elektrischen Kontakte zum Anschluss des Akkumulators an eine externe Stromquelle aufweist, sondern zur kontaktlosen Wiederaufladung des Akkumulators (52) ausgebildet ist.

11. Fernüberwachungssystem für Dampfgarer, **gekennzeichnet durch** ein autarkes Messgerät (24) nach einem der Ansprüche 1 bis 7 und ein Überwachungsgerät (42) nach Anspruch 8, 9 oder 10.

12. Fernüberwachungssystem nach Anspruch 11, **gekennzeichnet durch** eine elektrische Ladestation (62), welche zur berührungslosen Aufladung des wiederaufladbaren Akkumulators (36) des Messgerätes (24) nach einem der Ansprüche 1 bis 7 und zum berührungslosen Aufladen des wiederaufladbaren Akkumulators (52) des Überwachungsgerätes (42) nach Anspruch 7, 8 oder 9 ausgebildet ist, und dass das Messgerät (24) und das Überwachungsgerät (42) zum berührungslosen Aufladen ihres Akkumulators ausgebildet und an das Ladegerät adaptiert sind, so dass die wiederaufladbaren Akkumulatoren von beiden Geräten alternativ elektrisch kontaktlos aufladbar sind.

## Claims

1. Autonomous measuring apparatus (24) for steam cookers, **characterised in that** it is a portable unit which can be placed in a steam cooker and which contains a sensor circuit (34) for generating measurement signals in dependence on at least one sensor (28, 30) for detecting operational states in the steam cooker and further contains a radio transmitter (38) for wireless transmission of radio signals in dependence on the measurement signals of the sensor circuit (34) to a radio receiver arranged outside the steam cooker and that the radio transmitter has a transmission range of more than 5 metres, particularly at least 10 metres, in unscreened air space and includes an independent current supply.

2. Autonomous measuring apparatus according to claim 1, **characterised in that** the current supply comprises a current source in the form of a rechargeable accumulator (36) or a battery or at least one receiving chamber therefor.

3. Autonomous measuring apparatus according to claim 1 or 2, **characterised in that** the sensor (30) is arranged externally of the unit and connected therewith.

4. Autonomous measuring apparatus according to claim 1 or 2, **characterised in that** the sensor (28) is integrated the unit.

5. Autonomous measuring apparatus according to one of the preceding claims, **characterised in that** the current source is a rechargeable accumulator (36) and the unit does not have exposed electrical contacts, but is constructed for contactless recharging of the accumulator (36) by a contactless charging apparatus (62).

6. Autonomous measuring apparatus according to one of the preceding claims, **characterised in that** the at least one sensor (28, 30) is constructed for measuring at least one of the following operation states in a steam cooker: sensor environmental temperature in the steam cooker, cooking stock temperature, moisture content and steam content.

7. Autonomous measuring apparatus according to one of the preceding claims, **characterised in that** the radio transmitter (38) is constructed for cyclic transmission of the radio signals.

8. Monitoring apparatus, **characterised in that** it comprises a portable, mobile unit, which contains a radio receiver (40) for reception of electromagnetic radio signals of the radio transmitter (38) of the autonomous measuring apparatus according to one of the preceding claims, that the mobile unit contains optical indicating means (48) and/or an acoustic signal transmitter (50) for indicating data and/or informatory signals in correspondence with the received radio signals, and that the mobile unit has a current source preferably in the form of a battery or a rechargeable accumulator (52) for independent current supply or a receiving chamber therefor.

9. Monitoring apparatus according to claim 8, **characterised in that** it includes a clock (54) at which different time durations are settable and which has a display (56) indicating the respective residual time duration.

10. Monitoring apparatus according to claim 8 or 9, **characterised in that** the current source is a rechargeable accumulator (52) and the unit does not have exposed electrical contacts for connection of the accumulator with an external current source, but is constructed for contactless recharging of the accumulator (52).

11. Remote monitoring system for steam cookers, **characterised by** an autonomous measuring apparatus (24) according to one of claims 1 to 7 and a monitoring apparatus (42) according to claim 8, 9 or 10.

12. Remote monitoring system according to claim 11, **characterised by** an electrical charging station (62) which is constructed for contactless charging of the rechargeable accumulator (36) of the measuring apparatus (24) according to one of claims 1 to 7 and for contactless charging of the rechargeable accumulator (52) of the monitoring apparatus (42) according to claim 7, 8 or 9, and that the measuring apparatus (24) and the monitoring apparatus (42) are constructed for contactless charging of their accumulator and are adapted to the charging apparatus so that the rechargeable accumulators of both apparatus are alternatively electrically contactlessly chargeable.

## Revendications

1. Appareil de mesure autonome (24) pour cuiseur à vapeur, **caractérisé en ce qu'**il est une unité portative, pouvant être posée dans un cuiseur à vapeur, qui comprend un circuit de capteur (34) pour produire des signaux de mesure en fonction d'au moins un capteur (28, 30) destiné à détecter des états de marche dans le cuiseur à vapeur, **en ce qu'**il comprend un émetteur radio (38) pour l'émission sans câble de signaux radio en fonction des signaux de mesure du circuit de capteur (34) vers un récepteur radio disposé à l'extérieur du cuiseur à vapeur, et **en ce que** l'émetteur radio a une portée d'émetteur de plus de 5 m, en particulier au moins 10 m dans un espace aérien exempt d'écran, et **en ce qu'**il comprend une alimentation autonome en courant.

2. Appareil de mesure autonome selon la revendication 1, **caractérisé en ce que** l'alimentation en courant comprend une source de courant en forme d'accumulateur rechargeable (36) ou de batterie ou au moins une chambre de réception pour cela.

3. Appareil de mesure autonome selon la revendication 1 ou 2, **caractérisé en ce que** le capteur (30) est disposé extérieurement à l'unité et lui est reliée.

4. Appareil de mesure autonome selon la revendication 1 ou 2, **caractérisé en ce que** le capteur (28) est intégré dans l'unité.

5. Appareil de mesure autonome selon l'une des revendications précédentes, **caractérisé en ce que** la source de courant est un accumulateur rechargeable (36) et l'unité ne présente pas de contacts électriques dégagés mais est conçue pour un rechargement sans contact de l'accumulateur (36) par un appareil de recharge sans contact (62).

6. Appareil de mesure autonome selon l'une des revendications précédentes, **caractérisé en ce que** le au moins un capteur (28, 30) destiné à mesurer au moins un des états de marche suivants est conçu dans un cuiseur à vapeur : température environnante du capteur dans le cuiseur à vapeur, température du produit de cuisson, taux d'humidité ou teneur en vapeur.

7. Appareil de mesure autonome selon l'une des revendications précédentes, **caractérisé en ce que** l'émetteur radio (38) est conçu pour l'envoi autonome des signaux radio.

8. Appareil de surveillance, **caractérisé en ce qu'**il est une unité portative, mobile, laquelle comprend un récepteur radio (40) pour recevoir des signaux radio électromagnétiques de l'émetteur radio (38) de l'appareil de mesure autonome selon l'une des revendications précédentes, **en ce que** l'unité mobile comprend des moyens d'affichage optiques (48) et/ou un transmetteur de signaux acoustique (50) pour afficher des informations et/ou des signaux indicateurs conformément aux signaux radio reçus, et **en ce que** l'unité mobile présente une source de courant de préférence en forme d'une batterie ou d'un accumulateur rechargeable (52) pour l'alimentation autonome en courant ou une chambre de logement à cette fin.

9. Appareil de surveillance selon la revendication 8, **caractérisé en ce qu'**il comprend une horloge (54), sur laquelle peuvent être réglées différentes durées de temps, et laquelle présente un écran de visualisation (56) qui affiche la durée de temps restante respective.

10. Appareil de surveillance selon la revendication 8 ou 9, **caractérisé en ce que** la source de courant est un accumulateur rechargeable (52) et l'unité ne présente pas de contacts électriques dégagés pour le raccordement de l'accumulateur à une source de courant externe mais est conçue pour le rechargement sans contact de l'accumulateur (52).

11. Système de surveillance à distance pour cuiseur à vapeur, **caractérisé par** un appareil de mesure autonome (24) selon l'une des revendications 1 à 7 et un appareil de surveillance (42) selon la revendication 8, 9 ou 10.

12. Système de surveillance à distance selon la revendication 11, **caractérisé par** une station de recharge électrique (62), qui est conçue pour le chargement sans contact de l'accumulateur rechargeable (36) de l'appareil de mesure (24) selon l'une des revendications 1 à 7 et pour le chargement sans contact de l'accumulateur rechargeable (52) de l'appareil de surveillance (42) selon la revendication 7, 8 ou 9, et en ce que l'appareil de mesure (24) et l'appareil de surveillance (42) sont conçus pour un chargement sans contact de leur accumulateur et sont adaptés à l'appareil de recharge, de sorte que les accumulateurs rechargeables peuvent être chargés sans contact électriquement de façon alternative par les deux appareils.
